# EUROPEAN PATENT APPLICATION

(11) **EP 2 119 820 A1**
(43) Date of publication of application: **18.11.2009**
(21) Application number: 09160402.5
(22) Date of filing: 15.05.2009
(51) Int. Cl.: D06F 37/22

(54) **Washing machine**

(30) Priority: 16.05.2008 KR 20080045676
(71) Applicant: LG Electronics Inc., Seoul 150-721 (KR)
(72) Inventor: Koo, Bon Kwon, Seoul 153-023 (KR); Kim, Deok Kyu, Seoul 153-023 (KR); Jang, Jae Hyuk, Seoul 153-023 (KR); Seo, Bo Sung, Seoul 153-023 (KR); Seo, Hyun Seok, Seoul 153-023 (KR); Kim, Young Suk, Seoul 153-023 (KR)
(74) Representative: Vossius & Partner

(57) **Abstract**

A washing machine is provided. The washing machine controls a dehydration rotation speed by detecting a phase difference between a ball balancer and the laundry. Further, the washing machine controls a dehydration rotation speed at a dehydration segment based on a dehydration rotation speed of a driving device. Thereby, the washing machine minimizes energy using in a dehydration process by accelerating the dehydration rotation speed at a point at which a phase difference between the ball balancer and the laundry is a maximum. Further, by accelerating the dehydration rotation speed at a point at which the phase difference is a maximum, a vibration of the washing machine is remarkably reduced.

## Description

The present invention relates to a washing machine, and more particularly, to a washing machine for controlling a rotation speed for a dehydration process by detecting a phase difference between the laundry and a ball balancer, or a dehydration rotation speed of a driving device.

A conventional washing machine generally performs a dehydration process by constantly sustaining and accelerating a dehydration rotation speed of a drum. If a ball balancer is used, however, a drum vibrates due to a phase difference between the laundry and the ball balancer. Further, a significant amount of noise may occur in a drum due to the vibration, which can be bothersome to the user. Conventional washing machines cannot detect this phase difference and and thus are unable to control a dehydration rotation speed according to the phase difference, when performing a dehydration process. As a result, conventional washing machines tend to waste energy due to the effects of the eccentricity of the rotating drum.

The present invention has been made in an effort to solve the above problems, and the present invention provides a washing machine that can rapidly perform dehydration by controlling a dehydration rotation speed and reduce noise due to a vibration of a drum.

According to an aspect of the present invention, there is provided a washing machine including: a drum for washing the laundry; a driving device for delivering a driving force to the drum; a ball balancer coupled to the drum to reduce eccentricity of the drum; a phase difference detection device disposed at the driving device to detect a phase difference between the ball balancer and the laundry when dehydrating the laundry; and a controller for controlling a dehydration rotation speed dehydrating the laundry based on a phase difference detected in the phase difference detection device.

According to another aspect of the present invention, there is provided a washing machine including: a drum for washing the laundry; a driving device for delivering a driving force to the drum; a ball balancer coupled to the drum to reduce eccentricity of the drum; a rotation speed detection device disposed at the driving device to detect a dehydration rotation speed of the driving device when dehydrating the laundry; and a controller for controlling the dehydration rotation speed at a dehydration segment of the laundry based on the dehydration rotation speed.

According to another aspect of the present invention, there is provided a washing machine including: a drum for washing the laundry; a driving device for delivering a driving force to the drum; a ball balancer coupled to the drum to reduce eccentricity of the drum; and a controller for controlling to position the center of gravity of the ball balancer in an opposite direction of the center of gravity of the laundry when dehydrating the laundry.

The present invention will become more fully understood from the detailed description given herein below and the accompanying drawings, which are given by illustration only, and thus are not limitative of the present invention, and wherein:
FIG. 1 is a perspective view illustrating a washing machine according to an exemplary embodiment of the present invention;
FIG. 2 is a block diagram illustrating an example of control flow of the washing machine of FIG. 1;
FIG. 3 is a conceptual diagram illustrating a phase difference between the laundry and a plurality of balls;
FIG. 4 is a graph illustrating a relationship between a phase difference and a dehydration rotation speed of a motor of FIG. 2;
FIG. 5 is a graph illustrating a modified example of the graph of FIG. 4;
FIG. 6 is a graph illustrating another modified example of the graph of FIG. 4;
FIG. 7 is a graph illustrating another modified example of the graph of FIG. 4;
FIG. 8 is a block diagram illustrating another example of control flow of the washing machine of FIG. 1;
FIG. 9 is a graph illustrating an example of a dehydration rotation speed of a motor of FIG. 8;
FIG. 10 is a graph illustrating a modified example of the graph of FIG. 9; and
FIG. 11 is a graph illustrating another modified example of the graph of FIG. 9.

Hereinafter, exemplary embodiments according to the present invention will be described in detail with reference to the accompanying drawings.

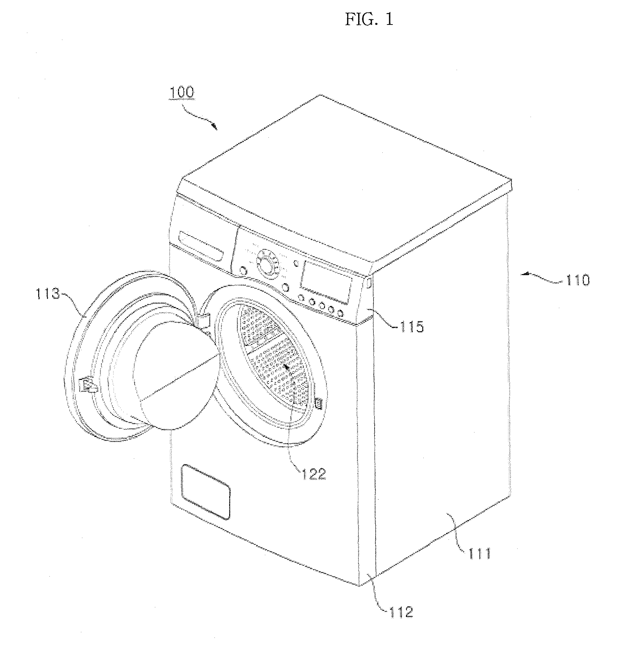

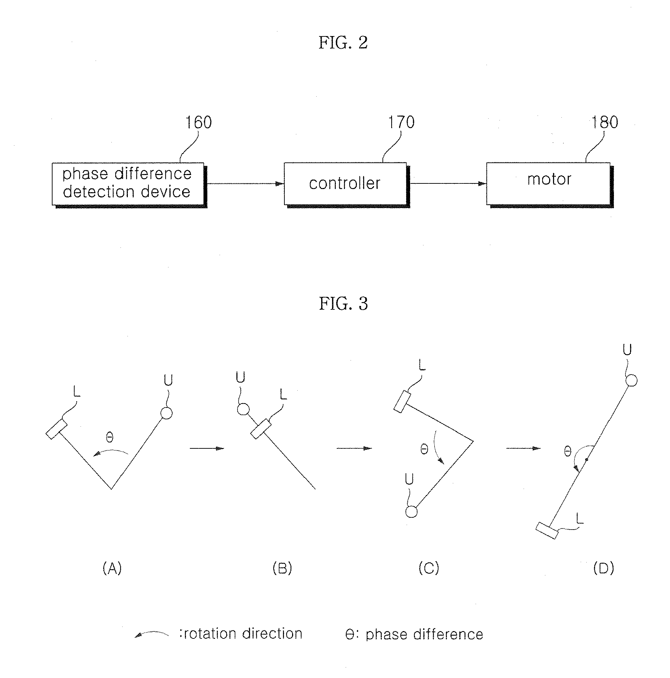

FIG. 1 is a perspective view illustrating a washing machine 100 according to an exemplary embodiment of the present invention. FIG. 2 is a block diagram illustrating an example of control flow of the washing machine 100 of FIG. 1.

Referring to FIG. 1, the washing machine 100 includes a cabinet 110, having a drum 122 disposed within the cabinet 110 for washing laundry therein, a washing water supply device (not shown) for injecting washing water to the drum, and a drainage device (not shown) for discharging the washing water to the outside after a washing cycle is terminated in the drum 122. A tub (not shown) may be disposed within the cabinet 110, which surrounds the drum 122.

A driving device (not shown) may also be included for delivering the rotary power to the drum 122 wash, rinse and dehydrate the laundry. The driving device may include all devices for delivering a driving force to the drum 122, and hereinafter, a motor 180 is described as an example of the driving device. Finally, a ball balancer (not shown) may also be included to reduce eccentricity of the drum 122 caused by the weight distribution of the laundry inserted into the drum 122.

Referring to FIGs. 1 and 2, the washing machine 100 includes the ball balancer (not shown) coupled to the drum 122 to rotate in the same direction as the drum 122 to reduce eccentricity of the drum 122. A phase difference detection device 160 may be disposed at the driving device to detect a phase difference between the ball balancer and the laundry is rotating during the dehydrating cycle. A controller 170 may be provided to control a dehydration rotation speed of the laundry based on the phase difference detected in the phase difference detection device 160.

When the dehydration cycle is performed, the motor 180 delivers a driving force to the drum 122 to rotate the drum at a high RPM. Accordingly, when drum 122 rotates the laundry within the drum 122 is also rotated by friction force with an inner side surface of the drum 122. As the drum 122 accellerates and rotates rapidly, the laundry becomes compressed at the inner side surface of the drum 122. The weight distribution in the drum 122 may become eccentric due to the placement of the compressed laundry and vibrate due to the eccentricity. The drum 122 also generates noise due to the vibration. Furthermore, the eccentricity disturbs the rotation of the drum 122, thus disturbing the dehydration process and causing potential damage to the washing machine.

The ball balancer may include a fluid and a plurality of balls and rotates in accordance with a rotation of the drum 122. As the ball balancer includes the fluid and the plurality of balls, when the drum 122 rotates, the fluid and the plurality of balls also rotate. The ball balancer is not limited thereto and can include various members for rotating according to a rotation of the drum 122 and reducing eccentricity by the laundry. Hereinafter, a case where the ball balancer includes a plurality of balls rotating according to a rotation of the drum 122 is described as an example.

As the drum rotates, the plurality of balls partially separate and rotate in the same direction as the drum 122. When the motor 180 reaches a constant average rotation speed, the plurality of balls gather at one side and rotate. While the plurality of balls rotate the plurality of balls form a phase difference with the laundry. At this point, a phase difference detection device 160 measures the phase difference between the laundry and the plurality of balls.

Once the phase difference is measured, the phase difference detection device 160 transmits the measured phase difference to the controller 170. The controller 170 then calculates the positions of the laundry and the plurality of balls based on the phase difference. The controller 170 controls a dehydration rotation speed of the laundry based on the calculated phase difference. A method in which the controller 170 controls the dehydration rotation speed will be described in detail hereinafter.

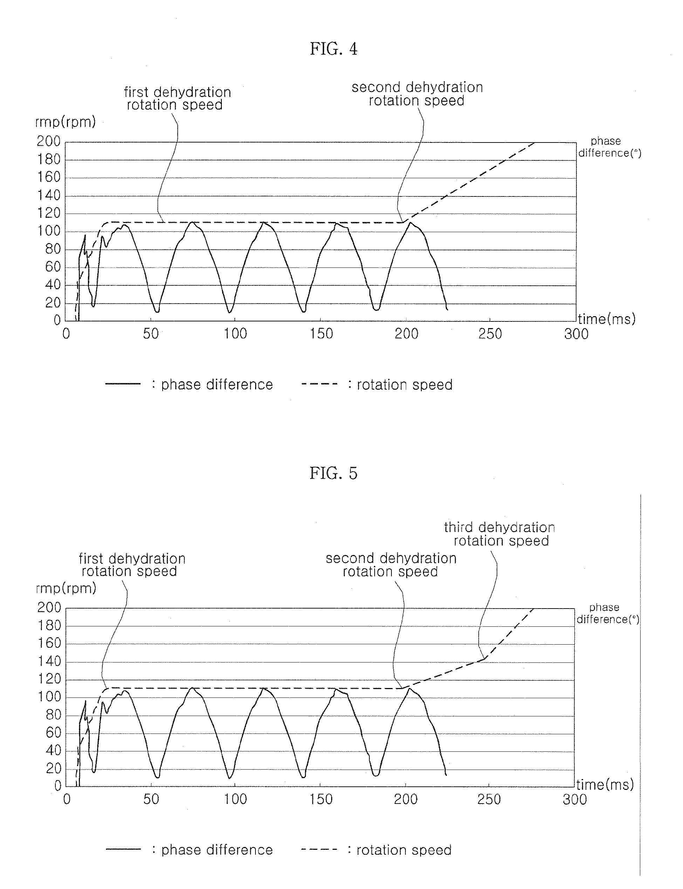

FIG. 3 is a conceptual diagram illustrating a phase difference θ between the laundry L and a plurality of balls U. FIG. 4 is a graph illustrating a relationship between a phase difference θ and a dehydration rotation speed of the motor 180 of FIG. 2.

Referring to FIGS. 3 and 4, when the drum 122 rotates, the plurality of balls U rotate. The plurality of rotating balls U form a phase difference θ with the laundry L. The phase difference detection device 160 detects the formed phase difference θ and transmits the phase difference θ to the controller 170. The transmitted phase difference θ is processed in the controller 170 in a graph form shown in FIG. 3.

In an exemplary embodiment of the invention, during rotation the controller 170 constantly sustains an average rotation speed of the motor 180. Once the average rotation speed is constant, the plurality of balls U rotate in the same direction as the drum 122. While the plurality of balls U move according to a rotation of the drum 122, the plurality of balls U form a phase difference θ with the laundry L. As the motor 180 continues to rotate, the plurality of balls U instantaneously approach the laundry L, and the phase difference θ between the plurality of balls U and the laundry L is reduced, as illustrated in state (A) of FIG. 3.

The phase difference θ is then reduced and when the plurality of balls U overlap with the laundry L, the phase difference θ equals 0° as illustrated in state (B) of FIG. 3. When the phase difference θ equals 0°, the laundry L and the plurality of balls U have the same phase. That is, the center of gravity of the ball balancer corresponds and overlaps with the center of gravity of the laundry. When the phase difference θ between the laundry L and the plurality of balls U overlap as in (B), the eccentricity of the drum 122 is aggravated by the laundry L and the plurality of balls U. When eccentricity is aggravated, if the drum 122 rotates, a vibration of the drum 122 is amplified, thus producing noise. In order for the laundry L to advance to a dehydration process, however, the eccentricity should be minimized. Accordingly, if the vibration of the drum is amplified the laundry cannot advance to a dehydration process.

As the drum 122 continues to rotate, the plurality of balls U recede from the laundry L after advancing through state (B) of FIG. 3. That is, the phase difference θ between the plurality of balls U and the laundry L increases in a direction of rotation of the drum 122, as shown in state (C) of FIG. 3. As the drum 122 continues to rotate, the phase difference θ between the plurality of balls U and the laundry L becomes 180°, as illustrated in state (D) of FIG. 3. That is, the phase difference θ between the plurality of balls U and the laundry L increases until whereby the plurality of balls U move to an opposite side of the laundry L and the plurality of balls U and the laundry L become balanced.

Further as illustrated in state (D) of FIG. 3, when the plurality of balls U and the laundry L are balanced, the center of gravity of the laundry L and the center of gravity of the ball balancer are disposed in an opposite positions. Thus, the eccentricity phenomenon in the drum 122 due to the laundry L is reduced by the plurality of balls U. More specifically, when the drum 122 rotates, the laundry L is compressed at an inner side surface of the drum 122 and dehydration is performed. The drum 122 may be inclined eccentrically to one side about a rotation axis because of the weight distribution of the laundry L causing the vibration. As the plurality of balls U move to a 180° position with respect to the laundry L, the plurality of balls acts to cause the drum 122 to incline to an opposite side. Thus the plurality of balls counter and substantially cancel out the eccentricity caused by the laundry L.

Accordingly, the eccentricity of the drum 122 may be partially alleviated, and the drum 122 may be in a state similar to a state where the laundry L does not exist. With the assistance of the plurality of balls U in this 180° position, the drum 122 may rotates as if the laundry L did not exist.

In a conventional washing machine, when dehydration of the laundry is performed, the motor 180 sustains rotational velocity at a predetermined speed and is then accelerated again. The controller 170 according to an exemplary embodiment of the invention, however, repeatedly detects the phase difference θ while constantly sustaining an average rotation speed of the motor 180. In this case, the dehydration rotation speed includes a first dehydration rotation speed and a second dehydration rotation speed. The first dehydration rotation speed is maintained during a phase difference detection period. Once the phase diffence is detected within a setting range, the drum may then be rotated at a second dehydration rotation speed and accelerated from there in order to dehydrate the laundry.

More specifically, as discussed above, the plurality of balls U rotate according to a rotation of the motor 180 and form a phase difference θ with the laundry L. Due to movement of the plurality of balls U, the phase difference θ continues to change. The phase difference detection device 160 detects the phase difference θ and transmits the phase difference θ to the controller 170.

The controller 170 then obtains a graph of FIG. 4 using the phase difference θ. The controller 170 controls the motor 180 to constantly sustain an average rotation speed of the motor 180 during a detection segment of the phase difference θ. If the phase difference θ is within a setting range during the constant rotation segment, the controller 170 controls an increase of the average rotation speed in order to dehydrate the laundry L inside the drum 122. In this case, the dehydration rotation speed of the drum 122 becomes the second dehydration rotation speed and the dehydration rotation speed of the drum 122 is gradually increased from the second dehydration rotation speed.

The setting range is a period in which the phase difference θ increases from a first phase difference in which the phase difference θ is a minimum to a second phase difference in which the phase difference θ is a maximum. That is, in the first phase difference, the phase difference θ equals 0°, and in the second phase difference, the phase difference θ equals 180°. Therefore, the motor 180 is accelerated to a point at which the phase difference θ changes from the first phase difference to the second phase difference.

As the motor 180 is accelerated to a point between the first phase difference and the second phase difference, the drum 122 may rapidly reach the second phase difference. In the second phase difference, because the phase difference between the laundry L and the plurality of balls U equals 180°, the drum 122 rotates in a state where eccentricity is reduced. That is, the controller 170 controls the center of gravity of the ball balancer and the center of gravity of the laundry to be disposed at an opposite sides. Once the setting range period is complete the dehydration rotation speed of the drum 122 may be accelerated to properly dehydrate the laundry L, thus reducing vibration noise

FIG. 5 is a graph illustrating a modified example of the graph of FIG. 4. In FIG. 5, elements similar to or corresponding to those of the previously described exemplary embodiment are denoted by the same reference numerals and therefore a detailed description thereof is omitted, and only dissimilar elements will be described in detail.

Referring to FIG. 5, if the phase difference is within a setting range (i.e. increasing from a first phase difference in which the phase difference is a minimum to a second phase difference in which the phase difference is a maximum), the controller 170 gradually accelerates a dehydration rotation speed of the motor 180 from the second dehydration rotation speed to a third dehydration rotation speed.

More specifically, the phase difference detection device 160 measures the phase difference and transmits the phase difference to the controller 170. The controller 170 determines whether the phase difference detected in the phase difference detection device 160 is within the setting range. If the phase difference is within the setting range, the controller 170 gradually increases the dehydration rotation speed from the second dehydration rotation speed. The controller 170 increases and sustains the dehydration rotation speed for a predetermined time period, and then accelerates again. The controller 170 can accelerate the dehydration rotation speed up to the third dehydration rotation speed by repeatedly performing the above-described process.

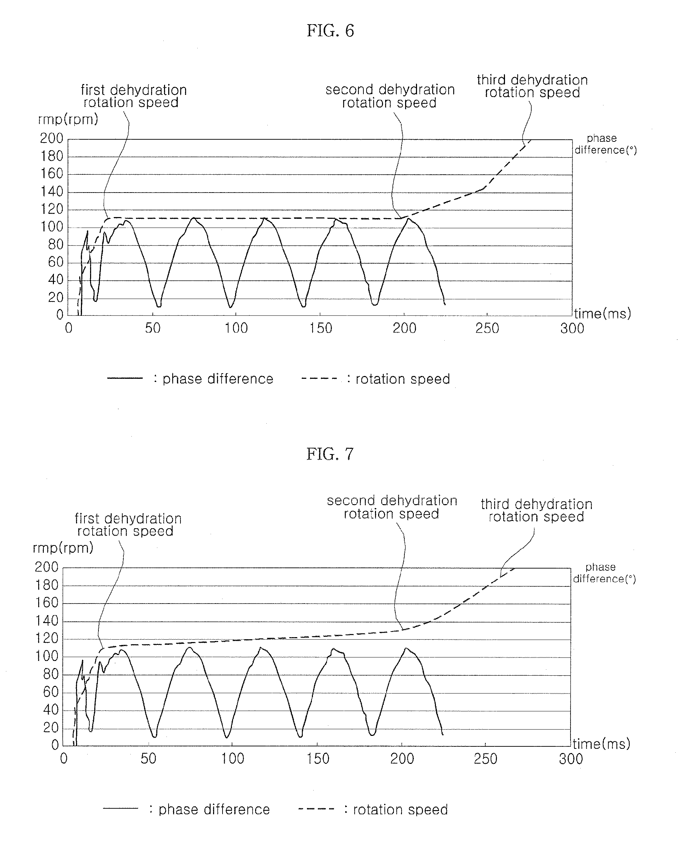

FIG. 6 is a graph illustrating another modified example of the graph of FIG. 4. In FIG. 6, elements similar to or corresponding to those of the previously described exemplary embodiment are denoted by the same reference numerals and therefore a detailed description thereof is omitted, and only dissimilar elements will be described in detail.

Referring to FIG. 6, if the phase difference is within a setting range (i.e. increasing from a first phase difference in which the phase difference is a minimum to a second phase difference in which the phase difference is a maximum), the controller 170 accelerates a dehydration rotation speed of the motor 180 at a predetermined slope, i.e. a constant acceleration. That is, when a phase difference measured by the phase difference detection device 160 is transmitted to the controller 170, the controller 170 determines whether the phase difference is within the setting range. If the phase difference is within the setting range, the controller 170 accelerates the dehydration rotation speed at a constant, predetermined slope. Thus, the dehydration rotation speed is accelerated from the second dehydration rotation speed to the third dehydration rotation speed. An acceleration slope can be set at different values.

If the phase difference is not within the setting range, the controller 170 continues to maintain the constant average rotation speed. In this manner, the controller 170 controls the dehydration rotation speed in order to reduce eccentricity of the drum 122 by using a phase difference between the laundry and the plurality of balls. The washing machine 100 is then able to dehydrate the laundry in a short time by controlling the dehydration rotation speed.

FIG. 7 is a graph illustrating another modified example of the graph of FIG. 4. In FIG. 7, elements similar to or corresponding to those of the previously described exemplary embodiment are denoted by the same reference numerals and therefore a detailed description thereof is omitted, and only dissimilar elements will be described in detail.

Referring to FIG. 7, if the phase difference is within a setting range (i.e. increasing from a first phase difference in which the phase difference is a minimum to a second phase difference in which the phase difference is a maximum) while accelerating the average rotation speed with a predetermined slope, the controller 170 controls to increase a dehydration rotation speed of the motor 180 in order to reduce vibration of the drum 122.

More specifically, the controller 170 gradually increases an average rotation speed of the motor 180. As the average rotation speed is increased, the phase difference detection device 160 measures a phase difference between the laundry and the plurality of balls and transmits the phase difference to the controller 170. The controller 170 determines whether the phase difference is within a setting range, and at the same time accelerates the average rotation speed at a predetermined slope based on the measured phase difference.

If the phase difference is within a setting range, the controller 170 increases a dehydration rotation speed of the motor 180. If the phase difference is not within a setting range, the phase difference detection device continues to measure the phase difference while the controller 170 accelerates an average rotation speed of the motor 180 at a predetermined slope. In this manner, the washing machine 100 reduces a vibration and noise of the drum 122 during a dehydration cycle.

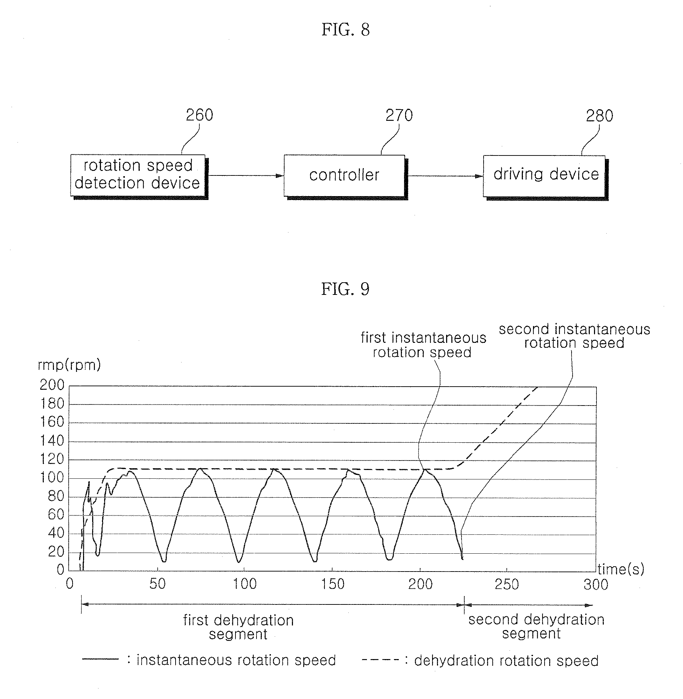

FIG. 8 is a block diagram illustrating another example of control flow of the washing machine 100 of FIG. 1. In FIG. 8, elements similar to or corresponding to those of the previously described exemplary embodiments are denoted by the same reference numerals and therefore a detailed description thereof is omitted, and only dissimilar elements will be described in detail.

Referring to FIG. 8, the washing machine 100 includes a drum (not shown) for washing the laundry, a driving device 280 for delivering a driving force to the drum, a ball balancer (not shown) coupled to the drum to rotate in the same direction as the drum and to reduce eccentricity of the drum, a rotation speed detection device 260 disposed at the driving device 280 to detect a dehydration rotation speed of the driving device 280 when dehydrating the laundry, and a controller 270 for controlling the dehydration rotation speed to dehydrate the laundry based on the dehydration rotation speed of the driving device 280. Other elements of the washing machine 100 are formed similarly to those of FIG. 1. The driving device 280 may be any device capable of delivering a driving force to the drum 122. For illustration purposes a motor 280 is described as an example of the driving device 280.

During a dehydration cycle, the motor 280 delivers a rotational driving force to rotate the drum 122. Accordingly, the laundry in the drum 122 also rotate by friction force with an inner side surface of the drum 122. As the drum 122 rapidly rotates, the laundry is conpressed at the inner side surface of the drum 122. The drum 122 becomes eccentrically loaded by the weight of the compressed laundry, thus causing the drum 122 to vibrate. The drum 122 also generates noise due to the vibration. Furthermore, the eccentricity disturbs the rotation of the drum 122, thus disturbing the dehydration process and causing potential damage to the washing machine.

The ball balancer rotates according to a rotation of the drum 122. The ball balancer may include a fluid and a plurality of balls rotating in the same direction as the drum 122, thus, when the drum 122 rotates, the fluid and the plurality of balls also rotate. The ball balancer is not limited thereto and may include various members for rotating according to a rotation of the drum 122 and reducing eccentricity caused by the laundry. For illustrative purposes, a ball balancer including a plurality of balls rotating according to a rotation of the drum 122 is described hereinafter.

The plurality of balls each rotate in accordance with a rotation of the drum 122 and partially separate as they rotate. When an average rotation speed of the motor 280 is constant, the plurality of balls are gather to one side as they rotate. The weight of the plurality of balls then form a phase difference with the weight of the laundry while rotating, and the dehydration rotation speed changes based on the phase difference.

The rotation speed detection device 260 measures a dehydration rotation speed of the motor 280 when the plurality of balls are gathered to one side. When the rotation speed detection device 260 measures the dehydration rotation speed and then transmits the measured dehydration rotation speed to the controller 170. When the dehydration rotation speed is transmitted, the controller 170 calculates positions of the laundry and the plurality of balls based on the dehydration rotation speed. The controller 170 controls the dehydration rotation speed of the laundry based on the calculated dehydration rotation speed. A method in which the controller 170 controls the dehydration rotation speed will be described hereinafter in detail.

FIG. 9 is a graph illustrating an example of a dehydration rotation speed of the motor 280 of FIG. 8.

As illustrated in FIG. 9, when the drum 122 rotates, the plurality of balls will rotate. The plurality of balls tend to change the dehydration rotation speed while rotating within the drum 122. The rotation speed detection device 260 may detect the dehydration rotation speed. The rotation speed detection device 260 then may transmit the dehydration rotation speed to the controller 270. The transmitted dehydration rotation speed may be processed by the controller 270 in a graph form as illustrated in FIG. 9.

The controller 270 constantly sustains an average rotation speed of the motor 280. The plurality of balls move according to a rotation of the drum 122 and form a phase difference with the laundry when an average rotation speed of the motor 280 is constantly maintained. Once the phase difference is formed, the dehydration rotation speed continues to change. When the laundry and the plurality of balls have the same phase, a dehydration rotation speed of the drum 122 reaches a maximum, eccentricity of the drum 122 is aggravated by the laundry and the plurality of balls. When the drum 122 rotates in a state in which eccentricity is aggravated, a vibration of the drum 122 is amplified and noise results.

When the laundry and the plurality of balls are positioned opposite sidesfrom one another, i.e. 180°, the laundry and the plurality of balls become balanced. Furthermore, the eccentricity phenomenon due to the weight distribution of the laundry in the drum is reduced by this positioning of the plurality of balls.

More specifically, when the drum 122 rotates to perform a dehydration cycle, the laundry may be compressed at an inner side surface of the drum 122. The drum 122 may then be inclined to one side about a rotation axis due to the weight distribution of the laundry. As a result the drum 122 may vibrates due to the eccentricity caused by the laundry. As the plurality of balls move to a side opposite that of the laundry, the drum 122 may be inclined to another side by the weight of the plurality of balls. Thus the plurality of balls counter and substantially cancel out the eccentricity caused by the laundry. Accordingly, the eccentricity of the drum 122 is alleviated, and the drum 122 may be in a state similar to a state where the laundry does not exist. The drum 122 may then rotate similarly to a case where the laundry does not exist.

In a conventional washing machine, during the dehydration cycle the motor 280 maintains a constant average rotation speed by accelerating a dehydration rotation speed to a predetermined speed and then accelerating again. However, the controller 270 of the washing machine 100 according to an exemplary embodiment of the present invention detects a dehydration rotation speed of the motor 280 while constantly sustaining an average rotation speed of the motor 280. More specifically, the plurality of balls rotate according to a rotation of the motor 280. When the plurality of balls rotate, the plurality of balls and the laundry form a phase difference. When the plurality of balls and the laundry form a phase difference, a dehydration rotation speed of the motor 280 changes. If the phase difference is within a setting range, the controller 170 controls to increase the average rotation speed in order to dehydrate the laundry of an internal space of the drum 122.

The setting range is a period in which an instantaneous rotation speed of the dehydration rotation speed decreases from a first instantaneous rotation speed in which an instantaneous rotation speed of the dehydration rotation speed is a maximum to a second instantaneous rotation speed in which an instantaneous rotation speed of the dehydration rotation speed is a minimum. Therefore, the motor 280 may be accelerated at a point at which the instantaneous rotation speed changes from the first instantaneous rotation speed to the second instantaneous rotation speed. If the motor 280 is accelerated at a point between the first instantaneous rotation speed and the second instantaneous rotation speed, eccentricity of the drum 122 is minimized. In the second instantaneous rotation speed, because the laundry and the plurality of balls are disposed in an opposite direction, the drum 122 rotates in a state where eccentricity is reduced. Therefore, by accelerating the dehydration rotation speed of the drum 122, dehydration of the laundry can be performed. Further, by reducing a vibration generated when dehydrating the laundry, noise can be reduced.

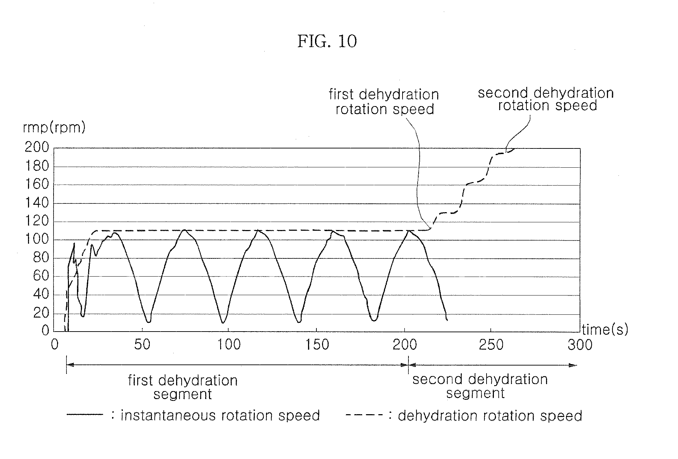

FIG. 10 is a graph illustrating a modified example of the graph of FIG. 9. In FIG. 10, elements similar to or corresponding to those of the previously described exemplary embodiment are denoted by the same reference numerals and therefore a detailed description thereof is omitted, and only dissimilar elements are described here in detail.

Referring to FIG. 10, if an instantaneous rotation speed of the dehydration rotation speed is within a setting range decreasing from a first instantaneous rotation speed in which an instantaneous rotation speed of the dehydration rotation speed is a maximum to a second instantaneous rotation speed in which an instantaneous rotation speed of the dehydration rotation speed is a minimum, the controller 270 repeatedly accelerates the dehydration rotation speed of the motor 280 and stops the accelleration as it increases from the first dehydration rotation speed to the second dehydration rotation speed.

That is, the rotation speed detection device 260 measures the dehydration rotation speed and transmits the dehydration rotation speed to the controller 270. The controller 270 determines whether the dehydration rotation speed detected in the rotation speed detection device 260 is within the setting range. If the dehydration rotation speed is within the setting range, the controller 270 increases the dehydration rotation speed from the first dehydration rotation speed. After the controller 270 increases the first dehydration rotation speed it then interrupts acceleration to maintaining the increased first dehydration speed for a predetermined period of time. The controller 270 then may again accelerate and interrupt the dehydration rotation speed. The controller 270 may continue this pattern to accelerate the first dehydration rotation speed up to the second dehydration rotation speed to dehydrate the laundry.

Further, if a rotation speed of the dehydration rotation speed is within a setting range decreasing from a first instantaneous rotation speed in which an instantaneous rotation speed of the dehydration rotation speed is a maximum to a second instantaneous rotation speed in which an instantaneous rotation speed of the dehydration rotation speed is a minimum, the controller 270 controls acceleration of a dehydration rotation speed of the motor 280 from the first dehydration rotation speed to the second dehydration rotation speed at a predetermined slope.

More specifically, when the measured rotation speed is transmitted to the controller 270, the controller 270 may determine whether the dehydration rotation speed is within the setting range. If the dehydration rotation speed is within the setting range, the controller 270 then may accelerate the dehydration rotation speed in which an average rotation speed is accelerated at a predetermined slope from the first dehydration rotation speed to the second dehydration rotation speed. If the dehydration rotation speed is not within the setting range, the controller 270 maintains the average rotation speed. In this manner the controller 270 controls the dehydration rotation speed in order to reduce eccentricity of the drum 122 when performing dehydration of the laundry. Further, the washing machine 100 can dehydrate the laundry in a short time by controlling the dehydration rotation speed.

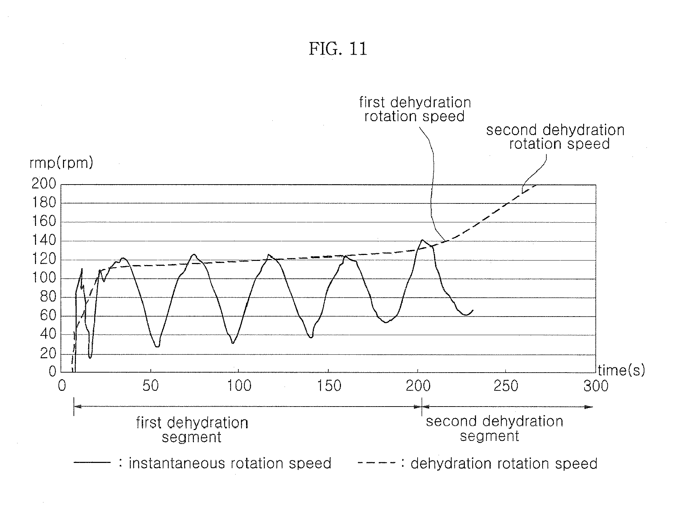

FIG. 11 is a graph illustrating another modified example of the graph of FIG. 9. In FIG. 11, elements similar to or corresponding to those of the previously described exemplary embodiment are denoted by the same reference numerals and therefore a detailed description thereof is omitted, and only dissimilar elements are described here in detail.

Referring to FIG. 11, when the dehydration rotation speed is accelerated at a predetermined slope, if the dehydration rotation speed is less than an average rotation speed of the dehydration rotation speed, the controller 270 controls an increase of the dehydration rotation speed via the motor 280 in order to reduce vibrations of the drum 122.

More specifically, while contantly accelerating a dehydration rotation speed of the motor 280 at a predetermined slope the controller 270 may detect a change in the dehydration rotation speed measured in the rotation speed detection device 260. The measured dehydration rotation speed is transmitted from the rotation speed detection device 260 to the controller 270. The transmitted dehydration rotation speed is compared with an average rotation speed of the dehydration rotation speed by the controller 270. If the dehydration rotation speed is less than the average rotation speed, the controller 270 controls to increase the dehydration rotation speed of the motor 280. Therefore, the washing machine 100 may reduce vibrations of the drum 122 during the dehydrating process. As a result of the vibration reduction, noise is reduced, thereby providing product reliability to consumers.

A washing machine according to the exemplary embodiments of the present invention may detect a phase difference between a ball balancer and the laundry and control a dehydration rotation speed based on the phase difference. Further, the washing machine may control a dehydration rotation speed at a dehydration segment based on a dehydration rotation speed of a driving device. The washing machine can thus rapidly advance, when to a dehydration process by controlling a dehydration rotation speed based on the phase difference or the dehydration rotation speed. Therefore, energy used by the washing machine may be conserved and used efficiently using when performing a dehydration process. Furthermore, noise can be reduced because eccentricity due to a phase difference between the ball balancer and the laundry can be minimized.

## Claims

1. A washing machine comprising:
a drum to receive laundry to be washed;
a driving device to deliver a rotational driving force to the drum;
a ball balancer coupled to the drum to rotate in the same directon as the drum to reduce eccentricity of the drum;
a phase difference detection device disposed at the driving device to detect a phase difference between the ball balancer and the laundry as the drum rotates; and
a controller to control a dehydration rotation speed of the drum to dehydrate the laundry based on a phase difference detected in the phase difference detection device.

2. The washing machine of claim 1, wherein the controller controls the dehydration rotation speed that includes:
a first dehydration rotation speed in which the driving device maintains a constant rotational speed to detect the phase difference; and
a second dehydration rotation speed in which the driving device increases the constant rotational speed to dehydrate the laundry if the phase difference detected in the first dehydration rotation speed is within a setting range.

3. The washing machine of claim 2, wherein the setting range is a period in which the phase difference increases from a first phase difference, which is a minimum, to a second phase difference, which is a maximum.

4. The washing machine of claim 2, wherein if the phase difference is within the setting range, increasing from a minimum phase difference to a maximum phase difference, the controller gradually accelerates the driving device from the second dehydration rotation speed to a third dehydration rotation speed.

5. The washing machine of claim 2, wherein if the phase difference is within the setting range, increasing from a minimum phase difference to a maximum phase difference, the controller accelerates the driving device from the second dehydration rotation speed to a third dehydration rotation speed at a predetermined slope.

6. The washing machine of claim 1, wherein if the phase difference is within a setting range as an average rotation speed is accelerated at a predetermined slope, the controller increases a dehydration rotation speed in order to reduce vibrations produced by the drum.

7. The washing machine of claim 6, wherein the setting range is a period in which the phase difference increases from a first phase difference, which is a minimum, to a second phase difference, which is a maximum.

8. A washing machine comprising:
a drum to receive laundry to be washed;
a driving device to deliver a rotational driving force to the drum;
a ball balancer coupled to the drum to rotate in the same directon as the drum to reduce eccentricity of the drum;
a rotation speed detection device disposed at the driving device to detect a dehydration rotation speed of the driving device as the driving device rotates; and
a controller to control the dehydration rotation speed during a dehydration segment of the laundry based on the dehydration rotation speed.

9. The washing machine of claim 8, wherein the dehydration segment comprises:
a first dehydration segment during which the driving device constantly maintains the dehydration rotation speed at an average rotation speed, and the rotation speed detection device detects a change of the dehydration rotation speed, and determines if the dehydration rotation speed is within a setting range,; and
a second dehydration segment, following the first dehydration segment once the dehydration rotation speed is determined to be within a setting range, where the driving device accelerates the dehydration rotation speed.

10. The washing machine of claim 9, wherein the setting range is a period in which an instantaneous rotation speed of the dehydration rotation speed decreases from a first instantaneous rotation speed, which is a maximum, to a second instantaneous rotation speed, which is a minimum.

11. The washing machine of claim 8, wherein if an instantaneous rotation speed of the dehydration rotation speed is within a setting range increasing from a first instantaneous rotation speed, which is a maximum, to a second instantaneous rotation speed, which is a minimum, the controller gradually accelerates the dehydration rotation speed of the driving device from a first dehydration rotation speed to a second dehydration rotation speed.

12. The washing machine of claim 8, wherein if an instantaneous rotation speed of the dehydration rotation speed is within a setting range increasing from a first instantaneous rotation speed, which is a maximum, to a second instantaneous rotation speed, which is a minimum, the controller controls the driving device to accelerate the dehydration rotation speed from a first dehydration rotation speed to a second dehydration rotation speed at a predetermined slope.

13. The washing machine of claim 8, wherein the controller controls the driving device to accelerate the dehydration rotation speed at a first predetermined slope, and if the dehydration rotation speed is less than an average of an instantaneous dehydration rotation speed, the controller increases the dehydration rotation speed of the driving device at a second predetermined slope in order to reduce a vibration of the drum.

14. A washing machine comprising:
a drum for washing the laundry;
a driving device for delivering a driving force to the drum;
a ball balancer coupled to the drum to reduce eccentricity of the drum; and
a controller for controlling a rotational position of the ball balancer such that a center of gravity of the ball bouncer is opposite the center of gravity of the laundry during a dehydration cycle.
